# EUROPÄISCHE PATENTSCHRIFT

(11) **EP 2 304 303 B1**
(45) Veröffentlichungstag und Bekanntmachung des Hinweises auf die Patenterteilung: **30.09.2015**
(21) Anmeldenummer: 09761671.8
(22) Anmeldetag: 05.06.2009
(51) Int. Cl.: F16L 37/14

(54) **PRESSFITTING FÜR EIN ROHR, INSBESONDERE KUNSTSTOFFROHR ODER KUNSTSTOFF-METALL-VERBUNDROHR**
PRESS-ON FITTING FOR A PIPE, IN PARTICULAR PLASTIC PIPE, OR PLASTIC-METAL COMPOSITE PIPE
RACCORD PAR PRESSION POUR UN TUYAU, EN PARTICULIER UN TUYAU EN PLASTIQUE OU UN TUYAU COMPOSITE PLASTIQUE-MÉTAL

(30) Priorität: 09.06.2008 DE 102008027382
(43) Veröffentlichungstag der Anmeldung: 06.04.2011
(73) Patentinhaber: Uponor Innovation AB, 73061 Virsbo (SE)
(72) Erfinder: KAUFMANN, Bernd, 97437 Hassfurt (DE); KERN-EMMERICH, Thomas, 97464 Niederwerrn (DE); GEIER, Rudolf, 97633 Sulzfeld (DE); FRIEDRICHS, Markus, 48565 Steinfurt (DE)
(74) Vertreter: Epping - Hermann - Fischer
(86) Internationale Anmeldenummer: PCT/EP2009/056958
(87) Internationale Veröffentlichungsnummer: WO 2009/150108

(56) Entgegenhaltungen:
- BE-A- 459 616
- DE-B3-102006 026 263
- US-A- 2 458 714
- US-A- 4 396 210
- US-A1- 2003 234 536

## Beschreibung

Die Erfindung betrifft einen Fitting für ein Rohr, bei dem es sich insbesondere um ein Kunststoffrohr oder Kunststoff-Metall-Verbundrohr handelt.

Fittinge für Rohre sind in den unterschiedlichsten Ausgestaltungen bekannt. Zumeist sind diese Fittinge ganzheitlich konstruiert, und zwar beispielsweise als Rohrverbinder, T-Stücke, Winkelstücke oder Wandscheiben. Für jeden Rohrquerschnitt bedarf es der Herstellung spezieller Fittinge, was die Variantenvielzahl in die Höhe treibt.

Es sind bereits modulare Fittingsysteme vorgeschlagen worden, bei denen an einem Basisteil, das beispielsweise als T-Stück oder Winkelstück ausgebildet ist, Anschlusskörper unterschiedlicher Dimensionen angebracht werden können. Beispiele für einen derartigen modularen bzw. adaptiven Fitting finden sich in DE 42 04 430 A1 und DE 10 2006 026 263 B3.

US 2003/234536 A1 offenbart einen Fitting für ein Rohr gemäss dem Oberbegriff des Anspruchs 1.

Aufgabe der Erfindung ist es, einen modularen Fitting für ein Rohr, insbesondere Kunststoffrohr oder Kunststoff-Metall-Verbundrohr zu schaffen, der über eine vereinfachte, lösbare oder wiederlösbare Verbindungstechnik verfügt.

Zur Lösung dieser Aufgabe wird mit der Erfindung ein Fitting für ein Rohr, insbesondere Kunststoffrohr oder Kunststoff-Metall-Verbundrohr vorgeschlagen, wobei der Fitting im Anspruch 1 definiert ist.

Der erfindungsgemäße Fitting umfasst einen Basiskörper und einen mit dem Basiskörper lösbar verbindbaren Anschlusskörper. Beide Körper weisen Durchlässe für ein Fluid auf, die im verbundenen Zustand der beiden Körper aneinander anschließen. Das Konzept, einen Fitting aus einem Basiskörper und einem Anschlusskörper zusammenzusetzen, hat den Vorteil, dass an ein und demselben Basiskörper mehrere verschiedene Anschlusskörper anbringbar sind. Diese Anschlusskörper können sich zum einen bezüglich der Geometrien für die anzuschließenden Rohr (Rohrdimensionen) aber auch hinsichtlich der Verbindungstechnik der Rohre mit den Anschlusskörpern unterscheiden. So ist es beispielsweise möglich, an ein und denselben Basiskörper Anschlusskörper mit Press-, Schiebe- oder Schraubhülsentechniken anzuschließen.

Überdies hat ein modularer Fitting herstellungstechnisch Vorteile. Der Basiskörper des Fittings lässt sich, da er im Regelfall nicht rotationssymmetrisch ist, nur durch Gesenkschmieden bzw. Gießen mit hohen Werkzeugkosten herstellen. Demgegenüber sind die Anschlusskörper bzw. Einsatzteile mit dem Basiskörper im Regelfall rotationssymmetrisch. Damit wird ein Fitting in einen weniger einfach herstellbaren Teil (Basiskörper) und einen einfacher herstellbaren Teil (Anschlusskörper) unterteilt. Die einfachere Herstellung des Anschlusskörpers bringt insgesamt für die Gesamtherstellungskosten des Fittings Vorteile. Mit nur wenigen im Gesenk geschmiedeten bzw. gegossenen Basiskörpern (beispielsweise Winkel- oder T-Stücke) kann ein komplettes Fittingsystem über einen sehr großen Nennweitenbereich (beispielsweise 25 bis 110 mm) aufgebaut werden. Überdies bringt ein modulares Fittingsystem den Vorteil mit sich, dass die Verpressung des Rohres am Fitting nicht notwendigerweise auf der Baustelle bzw. am Einbauort des Fittings erfolgen muss, sondern außerhalb dieser, indem zunächst der Anschlusskörper mit dem Rohr verbunden wird, um alsdann den Anschlusskörper mit dem Basiskörper zu verbinden.

Die beiden Körper des erfindungsgemäßen Fittings werden zum Zwecke ihrer Verbindung ineinandergeschoben. So weisen die beiden Körper ineinanderschiebbare Kontaktflächen auf, die im ineinandergeschobenen Zustand einander gegenüberliegen. Die Kontaktflächen, bei denen es sich im einfachsten Fall um eine zylindrische Außenfläche an dem einen Körper (beispielsweise Anschlusskörper) und um eine zylindrische Innenfläche an dem anderen Körper (beispielsweise Basiskörper) handelt, sind mit mindestens einem Paar von im ineinandergeschobenen Zustand einander gegenüberliegenden Vertiefungen (beispielsweise Nuten) versehen, welche zusammen einen Aufnahmeraum definieren. In diesen Aufnahmeraum wird nun ein strangförmiges Verriegelungselement eingebracht, das wie ein Passfederstück die beiden Körper aneinander fixiert und damit verriegelt.

Die Besonderheit des erfindungsgemäßen Fittings besteht nun darin, dass in den Aufnahmeraum von außen ein flexibles, im wesentlichen inkompressibles Verrieglungselement eingeführt werden kann. Hierzu weist einer der beiden Körper einen Zugangsraum (im einfachsten Fall in Form einer Bohrung) auf, der die Außenseite des betreffenden Körpers und den Aufnahmeraum miteinander verbindet und sich zwischen beiden erstreckt. Der Zugangsraum mündet dabei im wesentlichen stetig, d. h. im wesentlichen vorsprungslos in den Aufnahmeraum ein. Sofern der Aufnahmeraum (teil-)ringförmig ausgebildet ist, was bei zylindrischen Kontaktflächen der Fall ist, mündet der Zugangsraum tangential in den Aufnahmeraum ein. Durch den Aufnahmeraum lässt sich nun von außen ein inkompressibles, flexibles, im wesentlichen strangförmiges Verrieglungselement in Form beispielsweise einer Schnur, Kette, Litze, Draht oder dergleichen einführen.

Die Vertiefungen, die den Aufnahmeraum zwischen beiden Körpern bilden, wenn diese ineinandergeschoben sind, erstrecken sich zweckmäßigerweise über einen Umfangswinkelbereich von z.B. 180°. Umso größer der Umfangswinkel ist, über den sich der Aufnahmeraum erstreckt, umso mehr können Kippbewegungen, die zwischen beiden Körpern wirken, aufgenommen werden. Insoweit vorteilhaft ist es, wenn sich die gegenüberliegenden, den Aufnahmeraum bildenden Vertiefungen entlang eines Umfangswinkels von mehr als 180° und insbesondere von bis zu 300° erstrecken. Bei Ausführung als Schraubenlinie können sich die Vertiefungen auch über mehr als 360° erstrecken.

Ferner ist nach der Erfindung vorgesehen, dass das Verriegelungselement gegen ein unbeabsichtigtes Herausgleiten aus dem Aufnahmeraum außen am Basiskörper und/oder Anschlusskörper arretiert und festgelegt wird. Hierzu weist das Verriegelungselement an einem seiner gegenüberliegenden Enden einen Arretiervorsprung auf, der insbesondere mit einer am Basis- und/oder Anschlusskörper ausgebildeten Arretierfläche angreift, was beispielsweise durch eine Verhakung oder ein anderes Ineinandergreifen beider Elemente erfolgt, was das Herausrutschen des Verriegelungselements aus dem Aufnahmeraum bzw. eine Bewegung des Verriegelungselements relativ zum Aufnahmeraum verhindert.

In vorteilhafter Weiterbildung der Erfindung ist ferner vorgesehen, dass der Arretiervorsprung auch zur Handhabung des Verriegelungselements beim Hineinschieben in den Aufnahmeraum genutzt wird. Dies kann entweder direkt durch manuelles Ausüben von Druck mit beispielsweise der Hand auf den Arretiervorsprung realisiert werden; alternativ ist es möglich, dass ein Werkzeug verwendet wird. Zusätzlich ist es von Vorteil, wenn der Arretiervorsprung auch eine Handhabe, insbesondere eine Bohrung, eine Vertiefung oder eine Erhebung zum Ansetzen eines Ziehwerkzeuges aufweist, mit dem sich das Verriegelungselement wieder aus dem Aufnahmeraum herausziehen lässt, wenn dies erforderlich ist.

Um die ineinanderschiebbaren Kontaktflächen des Basiskörpers und des Anschlusskörpers gegen das Eindringen bzw. Austreten von Fluid besser schützen zu können, ist es vorteilhaft, wenn mindestens einer der beiden Körper mit einem Dichtelement versehen ist, das vom Durchlass des betreffenden Körpers aus betrachtet vor der den Aufnahmeraum bildenden Vertiefung angeordnet ist. Damit wird nicht nur der Austritt von Fluid aus dem Bereich zwischen den ineinandergeschobenen Kontaktflächen verhindert sondern auch unterbunden, dass Fluid bis in den Bereich des Aufnahmeraums hineingelangt.

Wie oben erwähnt, ist das in den Aufnahmeraum einführbare Verriegelungselement flexibel und im wesentlichen inkompressibel. Als Verriegelungselement eignet sich insbesondere eine Schnur aus Kunststoff, ein Draht aus Metall, eine flexible Welle oder Drahtlitze oder eine Kette. Das Verriegelungselement muss sich durch den Zugangsraum hindurch bis in den Aufnahmeraum schieben lassen. Dabei wird es in beiden Räumen durch Kontakt mit deren Begrenzungsflächen geführt. Somit kann das Verriegelungselement bei Einwirkung von Schubkräften dann, wenn es sich in zumindest dem Zugangsraum befindet, nicht mehr seitlich ausweichen und lässt sich damit weiter in den Fitting einführen, bis es sich über den Querschnitt des Aufnahmeraums hinweg erstreckt und somit seine Verriegelungsfunktion übernehmen kann.

Gemäss der Erfindung ist vorgesehen, dass einer der beiden Körper mit einem weiteren Zugangsraum ausgestattet ist. Beide Zugangsräume befinden sich dabei an gegenüberliegenden Enden des Aufnahmeraumes, wo sie jeweils in diesen vorzugsweise im wesentlichen stetig und vorsprungslos einmünden. Mit einer derartigen Konstruktion ist es möglich, das Verriegelungselement, das im eingeschobenen Zustand vorzugsweise bündig mit der Außenkontur des Fittings abschließt bzw. gegenüber dieser nach innen zurückspringt, wieder herauszuziehen. Hierzu wird das Verriegelungselement beispielsweise weiter in den Aufnahmeraum hineingeschoben bis es durch den sich an den Aufnahmeraum anschließenden weiteren Zugangsraum zumindest teilweise aus dem Fitting wieder herausgeschoben ist. Das herausgeschobene Ende kann dann mit einem Greifwerkzeug wie beispielsweise einer Zange oder dergleichen erfasst und somit das Verriegelungselement vollständig aus dem Fitting herausgezogen werden. Damit ist die Verriegelung zwischen Basiskörper und Anschlusskörper gelöst und beide können voneinander getrennt werden.

Gemäss der Erfindung ist vorgesehen, dass die beiden Zugangsräume benachbart zueinander an der Außenfläche des Basis- und/oder Anschlusskörpers enden. Hierbei weist die Außenfläche des betreffenden Körpers bzw. der betreffenden Körper Vorsprünge auf, die in winklig zueinander verlaufenden Flächen enden. Diese beiden Flächen sind unmittelbar benachbart zueinander. Wenn das Verriegelungselement vollständig in die Zugangsräume und den Aufnahmeraum eingeschoben ist, befindet sich der Arretiervorsprung zwischen den beiden Flächen, wobei der Arretiervorsprung mit dem Rand der Öffnung desjenigen der beiden Zugangsräume, in dem sich das dem Arretiervorsprung abgewandte Ende des Verriegelungselements befindet, zwecks Arretierung zusammenwirkt.

Zum Einführen des Verriegelungselements über einen Zugangsraum in den Aufnahmeraum eines Fittings gemäß einem der zuvor genannten Ausführungsbeispiele der Erfindung wird ein Werkzeug vorgeschlagen, dass versehen ist mit einem Werkzeugkörper, welcher eine Aufnahmevertiefung zur Aufnahme des Endes des flexiblen, im wesentlichen inkompressiblen Verriegelungselements aufweist. Mit Hilfe dieses Werkzeugkörpers kann das Verriegelungselement über den Zugangsraum bis in den Aufnahmeraum vorgeschoben werden.

Um bei Ausbildung des Fittings mit zwei Zugangsräumen das Verriegelungselement aus dem Aufnahmeraum wieder herausbewegen zu können, weist das Werkzeug an seinem Werkzeugkörper einen flexiblen Fortsatz zum Einführen in einen der beiden Zugangsräume auf. Mit diesem Fortsatz lässt sich das flexible Verriegelungselement soweit vorschieben, bis es teilweise aus dem in Vorschubrichtung hinteren Zugangsraum bis über die Außenfläche des Fittings vorsteht, so dass dieser vorstehende Bereich anschließend von einem Greifwerkzeug erfasst werden kann, um das Verriegelungselement vollständig aus dem Aufnahmeraum herauszubewegen.

Zweckmäßigerweise wird der flexible Fortsatz, dessen Querschnitt sich über den Querschnitt der Zugangs- und Aufnahmeräume erstreckt oder kleiner als dieser ist, von dem gleichen Material gebildet, aus dem auch das Verriegelungselement besteht. Wie bereits oben erwähnt, handelt es sich bei dem Verriegelungselement beispielsweise um eine Schnur aus Kunststoff. Demzufolge wird der flexible Fortsatz also auch von einem Stück der gleichen Schnur gebildet.

Schließlich betrifft die Erfindung auch die Verwendung eines Werkzeuges mit einer Aufnahmevertiefung zur Aufnahme eines Endes des flexiblen, im wesentlichen inkompressiblen Verriegelungselements eines Fittings der vorstehend genannten Art, indem das Verriegelungselement bei Aufnahme seines Endes durch die Aufnahmevertiefung über einen Zugangsraum in den Aufnahmeraum des Fittings geschoben wird. Eine weitere Verwendung dieses Werkzeuges mit einem flexiblen, im wesentlichen inkompressiblen Dorn zum Einführen in einen der Zugangsräume eines Fittings nach einem der vorstehend genannten Ausführungsbeispiele betrifft das teilweise Herausbewegen des Verriegelungselements aus dem Aufnahmeraum und in den anderen Zugangsraum sowie aus diesem heraus.

Die Erfindung wird nachfolgend anhand des Ausführungsbeispiels der Figuren 6 bis 10 und unter Bezugnahme auf alle Figuren näher erläutert. Die Figuren 1 bis 5 entsprechen nicht der Erfindung.

Im Einzelnen zeigen dabei:
- Fig. 1: perspektivisch und in Explosionsdarstellung die einzelnen Komponenten eines Fittings mit Basiskörper und Anschlusskörper sowie Verriegelungselement zum Verriegeln beider Körper im zusammengeschobenen Zustand,
- Fig. 2: einen Querschnitt durch die beiden Körper des Fittings im zusammengeschobenen Zustand jedoch ohne eingeführtes Verriegelungselement,
- Fig. 3: einen Längsschnitt durch die beiden Körper des Fittings im zusammengesetzten Zustand und mit eingeschobenem Verriegelungselement,
- Fig. 4: eine Querschnittsansicht wie in Fig. 2, jedoch mit Darstellung eines Werkzeuges, mit dem das flexible Verriegelungselement in den Fitting zwecks Verriegelung von Basis- und Anschlusskörper eingeschoben wird,
- Fig. 5: eine Querschnittsansicht wie in den Fign. 2 bzw. 4 mit Darstellung der Verwendung des Werkzeuges zum Herausbewegen des eingeschobenen Verriegelungselements zum Lösen der Verriegelung der beiden Körper,
- Fig. 6: einen Schnitt ähnlich dem gemäß Fig. 2 durch einen erfindungsgemässen ausgebildeten Fitting, bei dem der Aufnahmeraum sich über 270° erstreckt, so dass die beiden sich tangential erstreckenden Zugangsräume in unmittelbarer Nähe zueinander an der Außenfläche des Fittings enden,
- Fig. 7: ein Ausführungsbeispiel eines Verriegelungselements, das als Kunststoff-Schnur oder -Stab ausgebildet ist und an einem Ende einen Arretiervorsprung sowie am anderen Ende konisch zulaufend ausgebildet ist, wobei der sich an die konisch verlaufende Spitze anschließende Abschnitt des Verriegelungselements vorgebogen ist,
- Fig. 8: die Situation beim Einführen des Verriegelungselements in den Aufnahmeraum des Fittings,
- Fig. 9: die Situation, bei der das Verriegelungselement so weit eingeschoben ist, dass sich sein Verriegelungsvorsprung nahe der Außenfläche des Fittings befindet und
- Fig. 10: die Situation, in der das Verriegelungselement vollständig in den Fitting eingeschoben ist und sein Arretiervorsprung am Fitting arretiert ist.

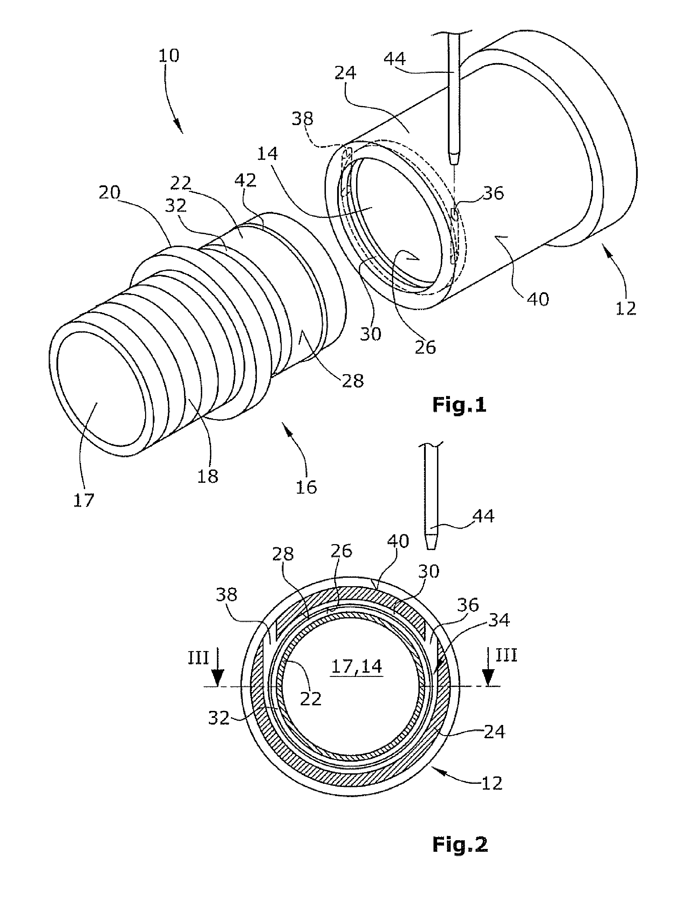

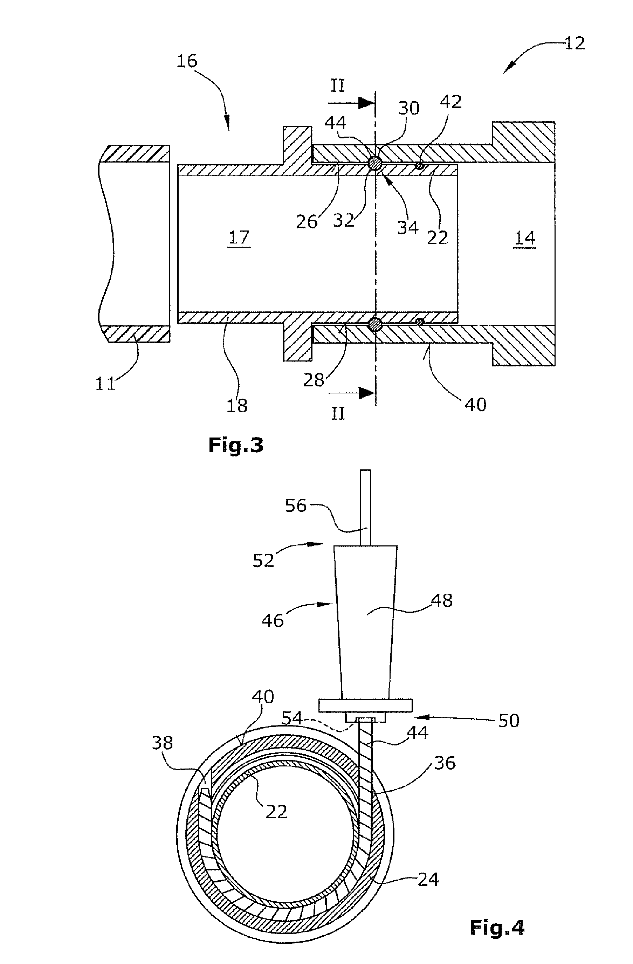

Fig. 1 zeigt teilweise die Einzelbestandteile eines Fittings 10 für Rohre 11, insbesondere Kunststoffrohre oder Kunststoff-Metall-Verbundrohre, der einen Basiskörper 12 mit einem Fluiddurchlass 14 und einen Anschlusskörper 16 mit einem Fluiddurchlass 17 aufweist. An den Anschlusskörper 16 lässt sich das Rohr 11 anschließen (siehe Fig. 3), wozu der Anschlusskörper 16 in diesem Beispiel eine Stützhülse 18 und eine (nicht gezeigte) Presshülse aufweist, mit der das Rohr radial gegen die Stützhülse 18 gedrückt und gepresst wird. Der Anschlusskörper 16 weist einen im wesentlichen zylindrischen Fittingkörper 20 auf, der im Bereich seiner Stützhülse 18 einen Dichtungsring aufweisen kann. Dieser Dichtungsring dichtet das Rohr gegen die Stützhülse 18 fluiddicht ab. Ferner weist der Anschlusskörper 16 eine von seinem Fittingkörper 20 abstehende Einsteckhülse 22 auf, die in einen Einsteckraum, nämlich den Durchlass 14 des Basiskörpers 12, einführbar ist. Der Basiskörper 12 ist mit einer in diesem Beispiel zylindrischen Wandung 24 versehen.

Dieser Basiskörper 12 kann als Rohrverbinder zur Aufnahme zweier Anschlusskörper 16 an entgegengesetzten Enden als Winkelstück, als Wandscheibe oder als T-Stück ausgebildet sein. Der Vorteil des modularen Fittings 10 besteht darin, dass der Basiskörper 12 zum Anschluss von im Durchmesser unterschiedlich großen Rohren verwendet werden kann, indem wahlweise einer von mehreren unterschiedlichen Anschlusskörpern 16 mit im Durchmesser unterschiedlichen Stützhülsen 18 verwendet wird. Derartige modulare Fittingkonzepte sind beispielsweise aus den eingangs genannten Druckschriften bekannt. Wie anhand der Fign. 1 bis 3 zu erkennen ist, weisen der Basiskörper 12 und der Anschlusskörper 16 ineinanderschiebbare Kontaktflächen 26,28 auf, die in diesem Beispiel zylindrisch ausgebildet sind. Die Kontaktfläche 26 des Basiskörpers 12 wird durch einen Teil der Innenseite der Wandung 24 gebildet, während die Kontaktfläche 28 des Anschlusskörpers 16 durch einen Teil der zylindrischen Außenfläche der Einsteckhülse 22 gebildet wird. Diese beiden Kontaktflächen sind mit Umfangsnuten bzw. dergleichen Umfangsvertiefungen 30,32 versehen, die im eingesteckten Zustand (siehe beispielsweise Fign. 2 und 3) einander gegenüberliegen, sich also in einer gemeinsamen Radialebene befinden. Diese beiden Vertiefungen 30,32 bilden zusammen einen Aufnahmeraum 34, der im wesentlichen zylindrisch ist und sich längs des Umfangs (Innenumfang des Basiskörpers 12 bzw. Außenumfang der Steckhülse 22 des Anschlusskörpers 16) erstreckt. In dem Basiskörper 12 befinden sich ferner zwei nach Art von Bohrungen ausgebildete Zugangsräume 36,38 (siehe insbesondere Fig. 2), über die von der Außenfläche 40 der Wandung 24 des Basiskörpers 12 durch die Wandung 24 hindurch ein Zugang zum Aufnahmeraum 34 geschaffen ist. Die beiden Zugangsräume 36,38 münden im wesentlichen tangential in die Vertiefung 30 auf der innenliegenden Kontaktfläche 26 des Basiskörpers 12 ein. Der Aufnahmeraum 34 erstreckt sich in diesem Beispiel über im wesentlichen 180°. Durch Ausbildung der Zugangsräume 36,38 in einem spitzen Winkel zueinander ist es auch möglich, dass sich der Aufnahmeraum 34, der sich zwischen den beiden Zugangsräumen 36,38 erstreckt, über mehr als 180° verläuft. Sofern die beiden Vertiefungen 30, 32 schraubenlinienförmig verlaufen, ist auch eine Erstreckung des Aufnahmeraums 34 über 360° und mehr möglich.

Wie man anhand der Figuren 1 und 3 sehen kann, befindet sich außen um die Steckhülse 22 des Anschlusskörpers 16 herum ein ringförmiges Dichtelement 42, das die einander gegenüberliegenden Kontaktflächen 26,28 gegeneinander abdichtet und zwischen dem Durchlass 14 bzw. 17 und dem Aufnahmeraum 34 angeordnet ist. Das Dichtelement 42 kann alternativ auch an der Innenfläche 26 des Basiskörpers 12 liegen, um die Kontaktflächen 26,28 gegeneinander abzudichten.

Zur mechanischen Verriegelung der beiden ineinander gesteckten Körper 12, 16 dient ein flexibles, im wesentlichen inkompressibles, strangförmiges Verriegelungselement 44, das in diesem Beispiel in Form einer Kunststoff-Schnur ausgebildet ist. Diese Kunststoff-Schnur 44 wird von außen in einen der beiden Zugangsräume 36, 38 eingeführt und in diesen hineingeschoben, wobei es über den betreffenden Zugangsraum 36,38 bis in den sich anschließenden Aufnahmeraum 34 hineingelangt. Bei Anordnung in dem Aufnahmeraum 34 verriegelt das Verriegelungselement 44 die beiden Körper 12,16 nach Art eines Passfederstücks. Diese Verriegelung kann durch Entfernern der Verriegelungsschnur 44 wieder aufgehoben werden.

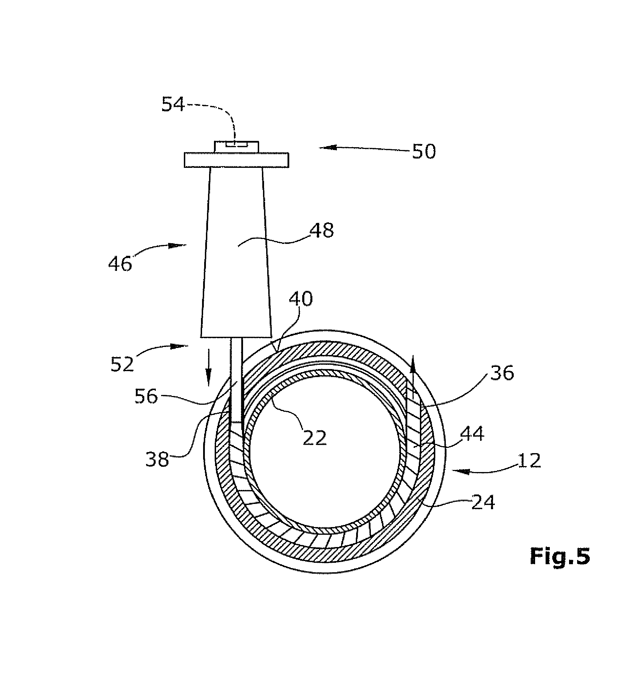

Das Einführen der Verriegelungsschnur 44 erfolgt zweckmäßigerweise mit Hilfe eines (Schiebe-)Werkzeuges 46, wie es in den Figuren 4 und 5 gezeigt ist. Das Werkzeug 46 weist einen mit der Hand erfassbaren Werkzeugkörper 48, der vorzugsweise ergonomisch geformt ist und zwei gegenüberliegenden Enden 50,52, auf. An dem einen Ende (beispielsweise Ende 50) weist der Werkzeugkörper 48 eine (Zentrier-)Aufnahmevertiefung 54 auf, in die das eine Ende der Verriegelungsschnur 44 eingetaucht ist, wenn diese in den Zugangsraum 36 und durch diese hindurch in den Aufnahmeraum 34 geschoben wird. Diese Situation ist in Fig. 4 gezeigt. Das Werkzeug 46 kann ferner zum teilweisen Zurückbewegen der vollständig in den Fitting 10 eingeschobenen Verriegelungsschnur 44 genutzt werden, wie es in Fig. 5 gezeigt ist. Hierzu weist der Werkzeugkörper 48 an seinem anderen Ende 52 einen flexiblen Dorn 56 auf, der zweckmäßigerweise aus dem gleichen Material und die gleiche Geometrie wie die Verriegelungsschnur 44 besteht bzw. aufweist. Das Werkzeug 46 besteht beispielsweise aus Kunststoff.

Die mechanische Verriegelung der beiden Körper 12, 16 des Fittings 10 erfolgt durch das flexible, im wesentlichen inkompressible, strangförmige Verriegelungselement 44, wenn sich dieses in dem in beide Körpern ausgebildeten Aufnahmeraum 34 befindet. Dabei reicht es aus, wenn sich das Verriegelungselement 44 ausschließlich in diesem Aufnahmeraum 34 befindet. Eine Erstreckung des Verriegelungselements 44 bis in einen oder gar beide Zugangsräume 36,38 ist zur Realisierung der Verriegelungsfunktion nicht erforderlich.

Bei dem Fitting 10 sind der Basiskörper 12 und der Anschlusskörper 16 durch ein (einziges) Verriegelungselement 44 miteinander verriegelt.

Je nach den aufzubringenden Haltekräften kann es erforderlich sein, mehrere flexible, im wesentlichen inkompressible und strangförmige Verriegelungselemente 44 vorzusehen, wobei dann auch mehrere Aufnahmeräume 34 vorhanden sind. Die mehreren Aufnahmeräume 34 können sich in unterschiedlichen Umfangswinkelbereichen erstrecken, so dass eine Verriegelung durch mehrere Verriegelungselemente 44 über den gesamten Umfang gegeben ist.

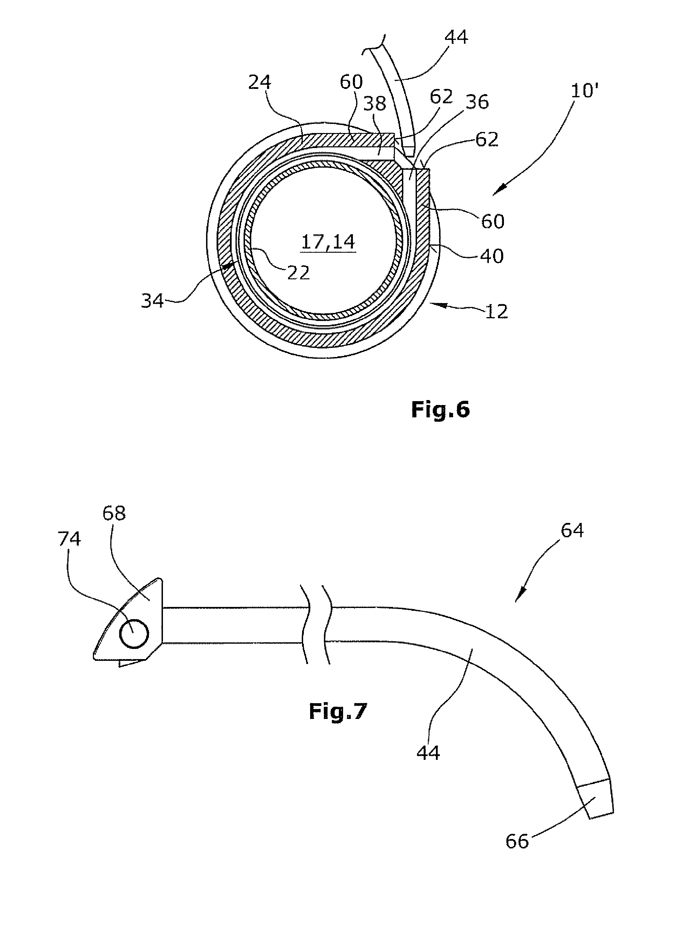

In den Fign. 6 bis 10 ist ein erfindungsgemässes Ausführungsbeispiel eines Fittings 10' beschrieben, der sich vom Fitting 10 der Fign. 1 bis 5 dadurch unterscheidet, dass sich der Aufnahmeraum 34 über im wesentlichen 270° erstreckt. Insoweit sei darauf hingewiesen, dass in den Fign. 6 bis 10 für solche Elemente des Fittings 10', die den Elementen des Fittings 10 konstruktiv bzw. funktional gleichen, die gleichen Bezugszeichen verwendet sind.

Der Basiskörper 12 des Fittings 10' ist mit zwei Vorsprüngen 60 an seiner Außenfläche 40 versehen, die sich tangential zu dem Aufnahmeraum 34 erstrecken und quer zueinander verlaufen. Durch diese beiden Vorsprünge 60 hindurch erstrecken sich die Zugangsräume 36. Die Zugangsräume 36,38 enden in den (Stirn-)Flächen 62, die spitz- oder stumpfwinklig oder, wie in diesem Ausführungsbeispiel, rechtwinklig zueinander verlaufen und nur einen geringen Abstand voneinander aufweisen. Das Verriegelungselement 44 weist ein gekrümmtes vorderes Ende 64 mit einer kegelstumpfförmigen Spitze 66 auf und ist an seinem der Spitze 66 gegenüberliegenden Ende mit einem Arretiervorsprung 68 versehen.

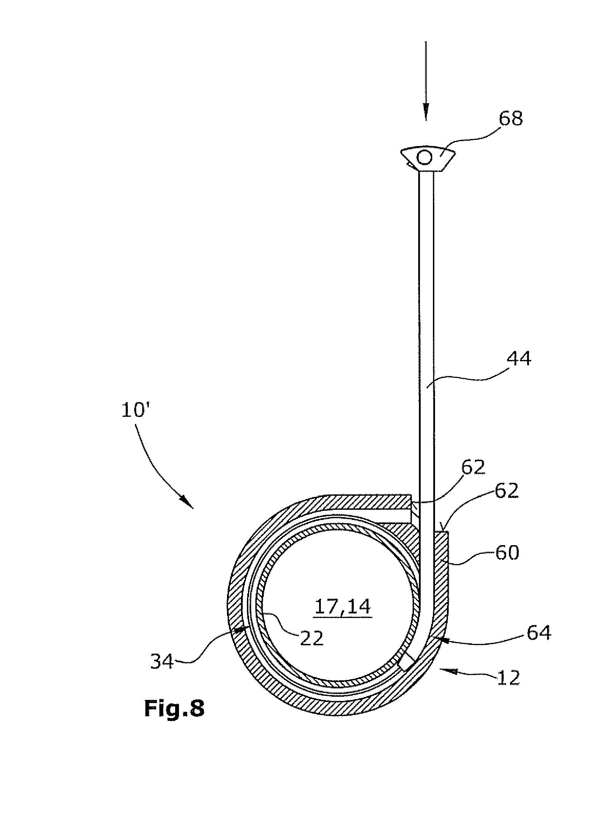

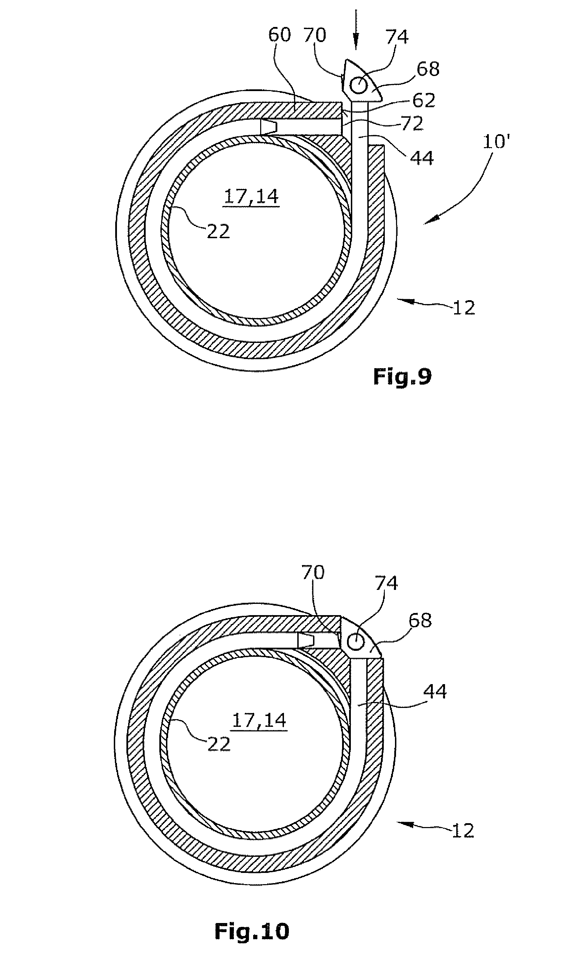

Wie anhand der Fign. 8 bis 10 zu erkennen ist, wird das Verriegelungselement 44 mit seinem gekrümmten Ende 64 in einen der beiden Zugangsräume 36 eingeführt. Beim Hineinschieben des Verriegelungselements 44 in den Zugangsraum 36 und den Aufnahmeraum 34 kann mit der Hand über das verbreiterte, den Arretiervorsprung 68 aufweisende Ende des Verriegelungselements 44 Druck auf dieses ausgeübt werden. Wenn das Verriegelungselement 44 auf diese Weise nahezu vollständig eingeschoben ist, ergibt sich die Situation gemäß Fig. 9. Wird nun ausgehend von dieser Situation das Verriegelungselement 44 weiter in den Fitting 10' hineingeschoben, so greift der Arretiervorsprung 68 in diesem Ausführungsbeispiel mit einer Rastnase 70 in die Zugangsöffnung 72 der Fläche 62 des Vorsprungs 60 ein. Dies ist in Fig. 10 gezeigt. Der Arretiervorsprung 68 füllt nun den Freiraum zwischen den beiden (Stirn-) Flächen 62 aus und liegt damit an der Außenfläche des Basiskörpers 12 an. Die Rastnase 70 verhindert wirkungsvoll, dass sich der Arretiervorsprung 68 lösen und damit das Verriegelungselement 44 aus dem Aufnahmeraum 34 rutschen kann.

Wie insbesondere anhand der Fign. 7 bis 10 zu erkennen ist, weist der Arretiervorsprung 68 eine quer zur Erstreckung des Verriegelungselements 44 verlaufende Bohrung 74 oder auch lediglich eine Vertiefung auf, die genutzt werden kann, um an dem Arretiervorsprung 68 Zugkräfte angreifen lassen zu können. Beispielsweise könnte man durch die Bohrung 74 einen Stab o.dgl. stecken, der dann als Handhabe und als Griff dient, um durch Ausübung von Zugkräften das Verriegelungselement 44 aus dem Fitting 10' herauszuziehen.

## Patentansprüche

1. Fitting für ein Rohr, insbesondere Kunststoffrohr oder Kunststoff-Metall-Verbundrohr mit
- einem Basiskörper (12) mit einem Durchlass (14) für ein Fluid,
- einem mit dem Basiskörper (12) lösbar verbindbaren, ebenfalls einen Durchlass (17) für ein Fluid aufweisenden Anschlusskörper (16), an den ein Rohr anschließbar ist,
- wobei beide Körper (12,16) ineinanderschiebbare Kontaktflächen (26,28) aufweisen, die mindestens ein Paar einander gegenüberliegende Vertiefungen (30,32) aufweisen, welche einen Aufnahmeraum (34) bilden, und
- einem in den Aufnahmeraum (34) einführbaren, im wesentlichen inkompressiblen und flexiblen Verriegelungselement (44) zur Fixierung der beiden Körper (12,16) aneinander,
dadurch gekennzeichner, dass
- mindestens einer der beiden Körper (12,16) einen ersten und einen weiteren Zugangsraum (36, 38) aufweist, wobei sich der erste Zugangsraum (36, 38) im wesentlichen in Verlängerung des Aufnahmeraums (34) an diesen anschliesst, und wobei der erste und der weitere Zugangsraum (36, 38) jeweils an gegenüberliegenden Enden des Aufnahmeraumes in diesen vozugsweise stetig und vorsprunglos einmünden und benachbart zueinander an einer Außenfläche (40) des Basiskörpers (12) und/oder des Anschlusskörpers (16) enden, wobei die Außenfläche (40) Vorsprünge (60) mit zueinander winklig verlaufenden und benachbarten Flächen (62) umfasst,
- wobei das Verriegelungselement (44) an einem seiner gegenüberliegenden Enden einen Arretiervorsprung (68) zur Arretierung des Verriegelungselements (44) außen an mindestens einem der beiden Körper (12,16) zwischen den zueinander winklig verlaufenden und benachbarten Flächen (62) zur Verhinderung eines unbeabsichtigten Herausgleitens des Verriegelungselements (44) aus dem Aufnahmeraum (34) aufweist.

2. Fitting nach Anspruch 1, **dadurch gekennzeichnet, dass** an der Außenfläche (40) des betreffenden Körpers (12) im Bereich des Zugangsraums (36,38) eine Arretierfläche (62) ausgebildet ist, an der der Arretiervorsprung (68) des Verriegelungselements (44) angreift.

3. Fitting nach Anspruch 1 oder 2, **dadurch gekennzeichnet, dass** die Kontaktflächen (26,28) zylindrisch sind und dass sich die gegenüberliegenden Vertiefungen (30,32) in Umfangsrichtung entlang zumindest eines Teils der Kontaktflächen (26,28) erstrecken.

4. Fitting nach Anspruch 3, **dadurch gekennzeichnet, dass** die Vertiefungen (30,32) sich entlang eines Umfangswinkels von mehr als 180° insbesondere von bis zu 300° und bei Ausbildung als Schraubenlinie auch über mehr als 360° erstrecken.

5. Fitting nach einem der Ansprüche 1 bis 4, **dadurch gekennzeichnet, dass** mindestens eine der Kontaktflächen (28) ein Dichtelement (42) aufweist, das im Bereich zwischen dem Durchlass (17) und der Vertiefung (30) angeordnet ist.

6. Fitting nach einem der Ansprüche 1 bis 5, **dadurch gekennzeichnet, dass** das Verriegelungselement (44) eine Schnur aus Kunststoff, ein Draht aus Metall, eine flexible Welle, eine Kette oder eine Metalllitze ist.

7. Fitting nach Anspruch 6, **dadurch gekennzeichnet, dass** das Verriegelungselement (44) an seinem dem Arretiervorsprung (68) abgewandten Ende (64) gekrümmt und/oder insbesondere konisch verjüngt ist.

8. Fitting nach einem der Ansprüche 1 bis 7, **dadurch gekennzeichnet, dass** in einem der beiden Körper (12,16) ein weiterer Zugangsraum (36,38) ausgebildet ist, der sich zwischen der Außenfläche (40) des betreffenden Körpers (12) und dem Aufnahmeraum (34) erstreckt, und dass beide Zugangsräume (36,38) an entgegengesetzten Enden des Aufnahmeraums (34) in diesen einmünden und im wesentlichen in Verlängerung des Aufnahmeraums (34) über dessen beiden entgegengesetzten Enden hinaus ausgebildet sind.

9. Fitting nach den Ansprüchen 3 und 8 oder einem der vorhergehenden Ansprüche, sofern auf die Ansprüche 3 und 8 rückbezogen, **dadurch gekennzeichnet, dass** sich der Aufnahmeraum (34) im wesentlichen über 270° erstreckt und dass die beiden Zugangsräume (36,38) außen am betreffenden Körper (12) in zwei winklig, insbesondere rechtwinklig zueinander verlaufenden Flächen enden, von denen eine die Arretierfläche (62) bildet.

10. Fitting nach einem der Ansprüche 1 bis 9, **dadurch gekennzeichnet, dass** der Arretiervorsprung eine Handhabe, insbesondere eine Bohrung, eine Vertiefung oder eine Erhebung zum Ansetzen eines Ziehwerkzeuges zum Herausziehen des Verriegelungselements aus dem Aufnahmeraum aufweist.

## Claims

1. Fitting for a pipe, in particular a plastic pipe or a plastic-metal composite pipe, having
- a main body (12) having a passage (14) for a fluid;
- a connecting body (16) which is releasably connectable to the main body (12) and likewise has a passage (17) for a fluid which is connectable to a pipe;
- wherein both bodies (12, 16) have contact faces (26, 28) which are insertable into one another and which have at least one pair of mutually opposite depressions (30, 32) which form a receptacle space (34); and
- a substantially uncompressible and flexible locking element (44) for securing the two bodies (12, 16) to one another, which is introducible into the receptacle space (34);
**characterized in that**
- at least one of the two bodies (12, 16) has a first and a further access space (36, 38), wherein the first access space (36, 38) adjoins the receptacle space (34) so as to substantially extend the latter, and wherein the first and the further access space (36, 38) at mutually opposite ends of the receptacle space in each case preferably continuously and without protrusions open thereinto and in a mutually adjacent manner terminate on an external face (40) of the main body (12) and/or of the connecting body (16), wherein the external face (40) comprises protrusions (60) having mutually adjacent faces (62) which run at an angle in relation to one another;
- wherein the locking element (44), for preventing the locking element (44) unintentionally slipping out of the receptacle space (34), on one of its mutually opposite ends has a latching protrusion (68) for externally latching the locking element (44) on at least one of the two bodies (12, 16) between the mutually adjacent faces (62) which run at an angle in relation to one another.

2. Fitting according to Claim 1, **characterized in that** a latching face (62), on which the latching protrusion (68) of the locking element (44) engages, is configured on the external face (40) of the respective body (12) in the region of the access space (36, 38).

3. Fitting according to Claim 1 or 2, **characterized in that** the contact faces (26, 28) are cylindrical, and **in that** the mutually opposite depressions (30, 32) extend in the circumferential direction along at least part of the contact faces (26, 28).

4. Fitting according to Claim 3, **characterized in that** the depressions (30, 32) extend along a circumferential angle of more than 180°, in particular of up to 300°, and in a configuration as a helical curve also across more than 360°.

5. Fitting according to one of Claims 1 to 4, **characterized in that** at least one of the contact faces (28) has a sealing element (42) which is disposed in the region between the passage (17) and the depression (30).

6. Fitting according to one of Claims 1 to 5, **characterized in that** the locking element (44) is a cord of plastic, a wire of metal, a flexible shaft, a chain, or a metal strand.

7. Fitting according to Claim 6, **characterized in that** the locking element (44) at its end which faces away from the latching protrusion (68) is curved and/or in particular conically tapered.

8. Fitting according to one of Claims 1 to 7, **characterized in that** a further access space (36, 38) which extends between the external face (40) of the respective body (12) and the receptacle space (34) is configured in one of the two bodies (12, 16), and **in that** both access spaces (36, 38) open into the receptacle space (34) at opposite ends thereof and are substantially configured in the extension of the receptacle space (34) beyond the two opposite ends thereof.

9. Fitting according to Claims 3 and 8 or one of the preceding claims if referring back to Claims 3 and 8, **characterized in that** the receptacle space (34) substantially extends across 270°, and **in that** the two access spaces (36, 38) terminate externally on the respective body (12) in two faces which run at an angle, in particular perpendicularly, in relation to one another, one of said faces forming the latching face (62).

10. Fitting according to one of Claims 1 to 9, **characterized in that** the latching protrusion has a facility, in particular a bore, a depression, or an elevation, for accommodating a pulling tool for pulling the locking element out of the receptacle space.

## Revendications

1. Raccord pour un tuyau, en particulier un tuyau en plastique ou un tuyau composite plastique-métal, comprenant
- un corps de base (12) avec un passage (14) pour un fluide,
- un corps de raccordement (16) pouvant être assemblé de façon séparable au corps de base (12) et présentant également un passage (17) pour un fluide, auquel un tuyau peut être raccordé,
- dans lequel les deux corps (12, 16) présentent des faces de contact (26, 28) insérables l'une dans l'autre, qui présentent au moins une paire de creux opposés l'un à l'autre (30, 32), qui forment une chambre de réception (34), et
- un élément de verrouillage essentiellement incompressible et flexible (44), pouvant être introduit dans la chambre de réception (34), pour la fixation des deux corps (12, 16) l'un à l'autre,
**caractérisé en ce que**
- au moins un des deux corps (12, 16) présente une première et une autre chambres d'accès (36, 38), dans lequel la première chambre d'accès (36, 38) se raccorde à la chambre de réception (34) essentiellement dans le prolongement de celle-ci et dans lequel la première et l'autre chambres d'accès (36, 38) débouchent dans la chambre de réception, de préférence de façon régulière et sans saillie, respectivement à des extrémités opposées de celle-ci et se terminent à proximité l'une de l'autre à une face extérieure (40) du corps de base (12) et/ou du corps de raccordement (16), dans lequel la face extérieure (40) comprend des saillies (60) avec des faces (62) proches et formant un angle l'une par rapport à l'autre,
- dans lequel l'élément de verrouillage (44) présente à une de ses deux extrémités opposées une saillie de blocage (68) pour le blocage de l'élément de verrouillage (44) extérieurement sur au moins un des deux corps (12, 16) entre les faces (62) proches et formant un angle l'une par rapport à l'autre pour empêcher une sortie imprévue de l'élément de verrouillage (44) hors de la chambre de réception (34).

2. Raccord selon la revendication 1, **caractérisé en ce qu'**une face de blocage (62) est formée sur la face extérieure (40) du corps concerné (12) dans la région de la chambre d'accès (36, 38), sur laquelle la saillie de blocage (68) de l'élément de verrouillage (44) vient s'appliquer.

3. Raccord selon la revendication 1 ou 2, **caractérisé en ce que** les faces de contact (26, 28) sont cylindriques et **en ce que** les creux opposés (30, 32) s'étendent en direction périphérique le long d'au moins une partie des faces de contact (26, 28).

4. Raccord selon la revendication 3, **caractérisé en ce que** les creux (30, 32) s'étendent le long d'un angle périphérique de plus de 180°, de préférence jusqu'à 300° et en formant une ligne hélicoïdale aussi sur plus de 360°.

5. Raccord selon l'une quelconque des revendications 1 à 4, **caractérisé en ce qu'**au moins une des faces de contact (28) présente un élément d'étanchéité (42), qui est disposé dans la région comprise entre le passage (17) et le creux (30).

6. Raccord selon l'une quelconque des revendications 1 à 5, **caractérisé en ce que** l'élément de verrouillage (44) est un cordon en plastique, un fil en métal, un arbre flexible, une chaîne ou un toron métallique.

7. Raccord selon la revendication 6, **caractérisé en ce que** l'élément de verrouillage (44) est courbé et/ou en particulier décroissant en cône à son extrémité (64) située à l'opposé de la saillie de blocage (68).

8. Raccord selon l'une quelconque des revendications 1 à 7, **caractérisé en ce qu'**une autre chambre d'accès (36, 38) est formée dans un des deux corps (12, 16), laquelle s'étend entre la face extérieure (40) du corps concerné (12) et la chambre de réception (34), et **en ce que** les deux chambres d'accès (36, 38) débouchent dans la chambre de réception (34) à des extrémités opposées de celle-ci et sont formées essentiellement dans le prolongement de la chambre de réception (34) au-delà des deux extrémités opposées de celle-ci.

9. Raccord selon les revendications 3 et 8 ou l'une quelconque des revendications précédentes, dans la mesure où elles se réfèrent aux revendications 3 et 8, **caractérisé en ce que** la chambre de réception (34) s'étend essentiellement sur 270° et **en ce que** les deux chambres d'accès (36, 38) se terminent extérieurement sur le corps concerné (12) en deux faces formant un angle, en particulier perpendiculaires l'une à l'autre, dont l'une forme la face de blocage (62).

10. Raccord selon l'une quelconque des revendications 1 à 9, **caractérisé en ce que** la saillie de blocage présente une prise, en particulier un alésage, un creux ou une surélévation pour l'application d'un outil de retrait pour retirer l'élément de verrouillage hors de la chambre de réception.
